# EUROPEAN PATENT APPLICATION

(11) **EP 2 975 313 A1**
(43) Date of publication of application: **20.01.2016**
(21) Application number: 14762360.7
(22) Date of filing: 14.03.2014
(51) Int. Cl.: F16L 55/00, F15D 1/02

(54) **FLUID-THROTTLING MEMBER**

(30) Priority: 15.03.2013 JP 2013053333
(71) Applicant: KYB Corporation, Tokyo 105-6111 (JP)
(72) Inventor: ABE, Masaya, Tokyo 105-6111 (JP)
(74) Representative: Grünecker Patent- und Rechtsanwälte PartG mbB
(86) International application number: PCT/JP2014/056977
(87) International publication number: WO 2014/142321

(57) **Abstract**

A fluid throttle member inserted into a flow passage hole of a flow passage member, the fluid throttle member being adapted to restrict a flow of a fluid, includes a fixing portion fixed to an inner wall of the flow passage hole to form a flow passage through which the fluid flows, wherein a throttle hole is formed to be offset from the fixing portion in the axial direction of the flow passage hole, the throttle hole being adapted to restrict the flow of the fluid.

## Description

### TECHNICAL FIELD

The present invention relates to a fluid throttle member adapted to restrict a flow of a fluid.

### BACKGROUND ART

As a fluid throttle member adapted to restrict a flow of a fluid, JP2004-340241A discloses an orifice pin placed in a radial air bearing serving as a flow passage member that supports a rotation shaft by the air supplied into a gap between the rotation shaft and a support surface, the orifice pin being adapted to restrict a flow of the air.

This orifice pin is a tubular member inserted into an orifice pin insertion hole of the radial air bearing. Inside the orifice pin, an injection hole serving as a throttle hole adapted to restrict the flow of the air supplied into the gap between the rotation shaft and the support surface is formed. The orifice pin is fixed by press-fitting an outer periphery thereof into the orifice pin insertion hole.

### SUMMARY OF INVENTION

However, in such an orifice pin, the injection hole is deformed by stress generated at the time of press-fitting into the orifice pin insertion hole. Therefore, there is a fear that variation in a flow passage area of the injection hole is generated due to a size error of stationary fit serving as an error of a press-fit amount.

An object of the present invention is to suppress generation of variation in a flow passage area of a throttle hole of a fluid throttle member.

According to an aspect of the present invention, a fluid throttle member inserted into a flow passage hole of a flow passage member, the fluid throttle member being adapted to restrict a flow of a fluid, includes a fixing portion fixed to an inner wall of the flow passage hole to form a flow passage through which the fluid flows, wherein a throttle hole is formed to be offset from the fixing portion in the axial direction of the flow passage hole, the throttle hole being adapted to restrict the flow of the fluid.

### BRIEF DESCRIPTION OF DRAWINGS

Fig. 1 is a plan view of a fluid throttle member according to a first embodiment of the present invention.
Fig. 2 is a sectional view along the line II-II of Fig. 1.
Fig. 3 is a plan view of a fluid throttle member according to a second embodiment of the present invention.
Fig. 4 is a sectional view along the line IV-IV of Fig. 3.

### DESCRIPTION OF EMBODIMENTS

Hereinafter, embodiments of the present invention will be described with reference to the drawings.

### (First Embodiment)

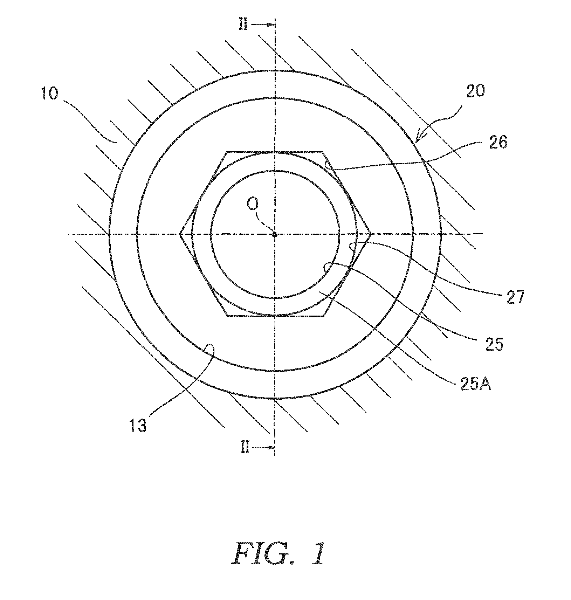

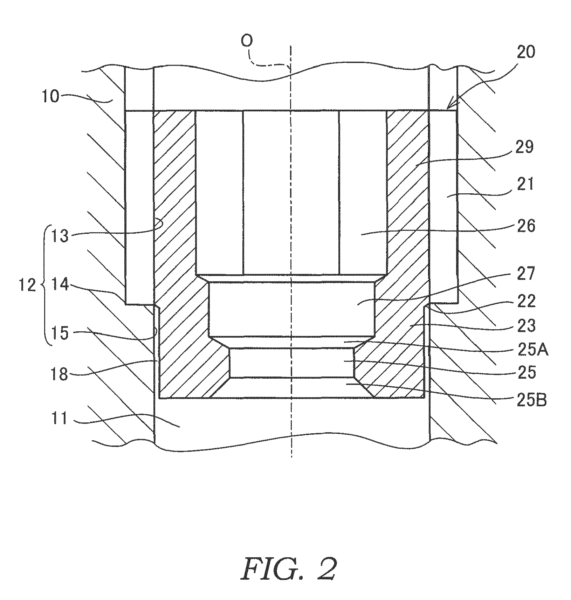

Firstly, with reference to Figs. 1 and 2, a fluid throttle member 20 according to a first embodiment will be described.

Figs. 1 and 2 show the fluid throttle member 20 placed in a housing 10 serving as a fluid passage member of a hydraulic pump which serves as a fluid pressure pump. The fluid throttle member 20 is to give resistance to a flow of working oil in the hydraulic pump. The fluid throttle member 20 which is applicable to the specification of the product is selected at the time of manufacturing the hydraulic pump, and assembled into the housing 10.

In the housing 10 of the hydraulic pump, a flow passage hole 11 forming an oil passage through which the working oil flows is formed. The flow passage hole 11 is a through hole having a circular flow passage section about the axis O.

An inner wall 12 of the flow passage hole 11 has a threaded portion 13 extending from one end of the flow passage hole 11, a cylindrical surface shape small diameter inner wall portion 15 having an open diameter smaller than the threaded portion 13, and an annular stepped portion 14 formed between the threaded portion 13 and the small diameter inner wall portion 15.

The fluid throttle member 20 is formed into a tubular shape to be inserted into the flow passage hole 11. The fluid throttle member 20 has a fixing portion 29 fixed to the inner wall 12 of the flow passage hole 11, a small diameter tubular portion 23 formed to have an outer diameter smaller than the fixing portion 29, and an annular stepped portion 22 formed between the fixing portion 29 and the small diameter tubular portion 23.

A threaded portion 21 is formed on an outer periphery of the fixing portion 29. The fluid throttle member 20 is fixed to the housing 10 by screwing the threaded portion 21 into the threaded portion 13 of the flow passage hole 11.

A tool engagement hole 26 having a hexagonal sectional shape is formed in the fixing portion 29. At the time of fastening the fluid throttle member 20, fastening toque about the axis O is given to the fluid throttle member 20 by a tool (not shown) inserted into the tool engagement hole 26.

The fluid throttle member 20 is screwed into the threaded portion 13 with predetermined fastening torque, and the stepped portion 22 is abutted with the stepped portion 14 of the flow passage hole 11. Thereby, the fluid throttle member 20 is retained at a predetermined position in the axial direction.

It should be noted that the "axial direction" respectively indicates the direction in which the axis O of the flow passage hole 11 extends.

The present invention is not limited to the above configuration. The flow passage hole 11 may be formed into a straight shape with no stepped portion 14 provided. The fluid throttle member 20 may be abutted with a member provided adjacently to the housing 10 or the like and positioned in the axial direction.

The small diameter tubular portion 23 is formed continuously to the fixing portion 29. In the middle of the small diameter tubular portion 23, a throttle hole 25 is formed. The throttle hole 25 has a circular flow passage section and is formed about the axis O. The throttle hole 25 forms an orifice serving as a throttle having a predetermined flow passage area. The throttle hole 25 gives resistance to a flow of the working oil passing through this throttle hole and adjusts a pressure difference of the working oil before and after the throttle hole 25.

Annular tapered portions 25A, 25B are formed in the small diameter tubular portion 23 so as to sandwich the throttle hole 25. The tapered portions 25A, 25B are formed into a conical base inclined with respect to the axis O, and guide and let the working oil smoothly flow before and after the throttle hole 25.

The small diameter tubular portion 23 extends from the fixing portion 29 in the axial direction. The throttle hole 25 is offset from the fixing portion 29 in the axial direction.

A linking hole 27 is formed over the fixing portion 29 and the small diameter tubular portion 23. The linking hole 27 has a circular flow passage section and is formed about the axis O. A flow passage of the fluid throttle member 20 is formed by the tool engagement hole 26, the linking hole 27, the tapered portion 25A, the throttle hole 25, and the tapered portion 25B.

At the time of assembling the fluid throttle member 20 to the housing 10, the threaded portion 21 of the fixing portion 29 is screwed into the threaded portion 13 of the flow passage hole 11, and the stepped portion 22 of the fixing portion 29 is pressed onto the stepped portion 14 of the flow passage hole 11. At this time, a compression load is given to the fixing portion 29 of the fluid throttle member 20 from the stepped portion 14 of the flow passage hole 11. Therefore, the fixing portion 29 is deformed in the direction in which inner and outer diameters thereof are reduced. At this time, the throttle hole 25 is placed away from the fixing portion 29 in the axial direction. Thus, deformation of the throttle hole 25 by stress generated in the fixing portion 29 is suppressed.

The small diameter tubular portion 23 has the outer diameter smaller than the fixing portion 29. Thereby, a gap 18 is formed between an outer periphery of the small diameter tubular portion 23 and the inner wall 12 of the flow passage hole 11. Therefore, when the fixing portion 29 is fixed to the inner wall 12 of the flow passage hole 11, the outer periphery of the small diameter tubular portion 23 is not abutted with the inner wall 12 of the flow passage hole 11. Thus, deformation of the throttle hole 25 upon direct receipt of force from the inner wall 12 of the flow passage hole 11 can be avoided.

Since the deformation of the throttle hole 25 is suppressed as described above, generation of variation in a flow passage area of the throttle hole 25 due to fastening torque given to the fluid throttle member 20 is suppressed. Therefore, since the throttle hole 25 can give set resistance to the flow of the working oil at the time of actuating the hydraulic pump, desired performance of the hydraulic pump can be ensured.

According to the above first embodiment, the following operations and effects will be exerted.
(1) The fluid throttle member 20 includes the fixing portion 29 fixed to the inner wall 12 of the flow passage hole 11 to form the flow passage through which the fluid flows, and the throttle hole 25 adapted to restrict the flow of the fluid. The fixing portion 29 and the throttle hole 25 are offset from each other in the axial direction of the flow passage hole 11.
   Thereby, the fixing portion 29 and the throttle hole 25 formed in the fluid throttle member 20 are placed away from each other in the axial direction of the flow passage hole 11. Therefore, when the fixing portion 29 is fixed to the inner wall 12 of the flow passage hole 11, the deformation of the throttle hole 25 by the stress generated in the fixing portion 29 is suppressed. Thus, generation of variation in a sectional area of the throttle hole 25 is suppressed.
(2) The fluid throttle member 20 also has the small diameter tubular portion 23 provided continuously to the fixing portion29, the small diameter tubular portion having the outer diameter smaller than the fixing portion 29. The throttle hole 25 is formed in the small diameter tubular portion 23. The small diameter tubular portion 23 is arranged with the gap 18 from the inner wall 12 of the flow passage hole 11.
   Thereby, when the fixing portion 29 is fixed to the inner wall 12 of the flow passage hole 11, abutment of the outer periphery of the small diameter tubular portion 23 with the inner wall 12 of the flow passage hole 11 and deformation of the throttle hole 25 are suppressed. Thus, the generation of the variation in the sectional area of the throttle hole 25 is suppressed.
(3) The fixing portion 29 is screwed into the threaded portion 13 formed on the inner wall 12 of the flow passage hole 11.

Thereby, when the fixing portion 29 is screwed into the threaded portion 13, the deformation of the throttle hole 25 by the stress generated in the fixing portion 29 is suppressed. Therefore, the generation of the variation in the flow passage area of the throttle hole 25 is suppressed.

### (Second Embodiment)

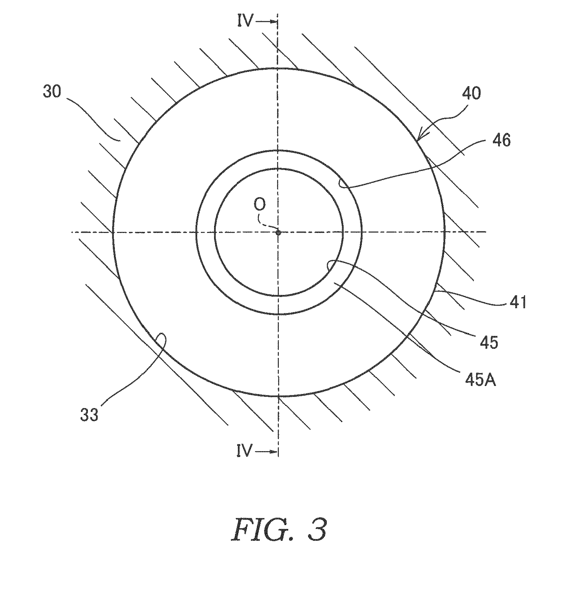

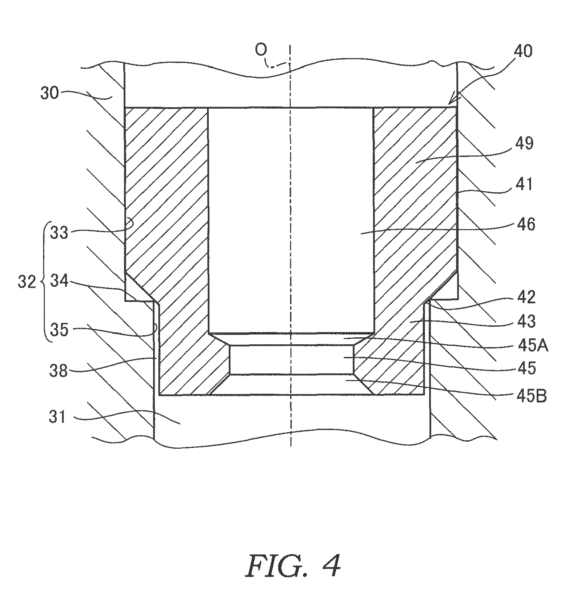

Next, with reference to Figs. 3 and 4, a fluid throttle member 40 according to a second embodiment of the present invention will be described. In the fluid throttle member 20 according to the first embodiment, the fixing portion 29 is screwed into the threaded portion 13 of the flow passage hole 11. The second embodiment is different from the first embodiment in that a fixing portion 49 is press-fitted into an inner wall 32 of a flow passage hole 31.

In a housing 30 serving as a flow passage member of a hydraulic pump, the flow passage hole 31 forming an oil passage through which working oil flows is formed. The flow passage hole 31 is a through hole having a circular flow passage section about the axis O.

The inner wall 32 of the flow passage hole 31 has a cylindrical surface shape large diameter inner wall portion 33 having a predetermined open diameter, a cylindrical surface shape small diameter inner wall portion 35 having an open diameter smaller than the large diameter inner wall portion 33, and an annular stepped portion 34 formed between the large diameter inner wall portion 33 and the small diameter inner wall portion 35.

The fluid throttle member 40 is formed into a tubular shape to be inserted into the flow passage hole 31. The fluid throttle member 40 has the fixing portion 49 fixed to the inner wall 32 of the flow passage hole 31, a small diameter tubular portion 43 formed to have an outer diameter smaller than the fixing portion 49, and an annular stepped portion 42 formed between the fixing portion 49 and the small diameter tubular portion 43.

On an outer periphery of the fixing portion 49, a fit surface 41 fitted to the large diameter inner wall portion 33 of the flow passage hole 31 in a relationship of stationary fit is formed. The fluid throttle member 40 is fixed to the housing 30 by press-fitting the fit surface 41 into the large diameter inner wall portion 33 of the flow passage hole 31.

At the time of assembling the fluid throttle member 40, the fluid throttle member 40 is inserted into the flow passage hole 31 with a predetermined load, and the stepped portion 42 is abutted with the stepped portion 34 of the flow passage hole 31. Thereby, the fluid throttle member 40 is retained at a predetermined position in the axial direction.

The present invention is not limited to the above configuration. The flow passage hole 31 may be formed into a straight shape with no stepped portion 34 provided. The fluid throttle member 40 may be abutted with a member provided adjacently to the housing 30 or the like and positioned in the axial direction.

The small diameter tubular portion 43 is formed continuously to the fixing portion 49. In the middle of the small diameter tubular portion 43, a throttle hole 45 is formed. The throttle hole 45 has a circular flow passage section and is formed about the axis O. The throttle hole 45 forms an orifice serving as a throttle having a predetermined flow passage area. The throttle hole 45 gives resistance to a flow of the working oil passing through this throttle hole and adjusts a pressure difference of the working oil before and after the throttle hole 45.

Annular tapered portions 45A, 45B are formed in the small diameter tubular portion 43 so as to sandwich the throttle hole 45. The tapered portions 45A, 45B are formed into a conical base inclined with respect to the axis O. The tapered portions 45A, 45B guide and let the working oil smoothly flow before and after the throttle hole 45.

The small diameter tubular portion 43 extends from the fixing portion 49 in the axial direction. The throttle hole 45 is offset from the fixing portion 49 in the axial direction.

A through hole 46 is formed over the fixing portion 49 and the small diameter tubular portion 43. The through hole 46 has a circular flow passage section and is formed about the axis O. A flow passage of the fluid throttle member 40 is formed by the through hole 46, the tapered portion 45A, the throttle hole 45, and the tapered portion 45B.

At the time of assembling the fluid throttle member 40 to the housing 30, the fluid throttle member 40 is press-fitted into the flow passage hole 31 of the housing 30. At this time, a compression load is given to the fixing portion 49 of the fluid throttle member 40 from the inner wall 32 of the flow passage hole 31. Therefore, the fixing portion 49 is deformed in such a manner that inner and outer diameters thereof are reduced. At this time, the throttle hole 45 is placed away from the fixing portion 49 in the axial direction. Thus, deformation of the throttle hole 45 by stress generated in the fixing portion 49 is suppressed.

The small diameter tubular portion 43 has the outer diameter smaller than the fixing portion 49. Thereby, a gap 38 is formed between an outer diameter of the small diameter tubular portion 43 and the inner wall 32 of the flow passage hole 31. Therefore, the outer periphery of the small diameter tubular portion 43 is not abutted with the inner wall 32 of the flow passage hole 31. Thus, deformation of the throttle hole 45 upon direct receipt of force from the inner wall 32 of the flow passage hole 31 can be avoided.

As described above, the deformation of the throttle hole 45 in a state where the fluid throttle member 40 is fixed to the housing 30 is suppressed. Therefore, generation of variation in a flow passage area of the throttle hole 45 due to a size error of stationary fit serving as an error of a press-fit amount set between the inner wall 32 of the flow passage hole 31 and the outer periphery of the fixing portion 49 is suppressed. Thus, since the throttle hole 45 can give set resistance to the flow of the working oil at the time of actuating the hydraulic pump, desired performance of the hydraulic pump can be ensured.

It should be noted that in order to detach the fluid throttle member 40 from the housing 30, a threaded portion may be formed in the through hole 46 of the fixing portion 49 and the fluid throttle member 40 may be removed from the flow passage hole 31 via a tool screwed to this threaded portion.

According to the above second embodiment, the operations and effects (1) and (2) described above are exerted as well as the first embodiment, and the following operation and effect are also exerted.

(4) In the fluid throttle member 40, the fixing portion 49 is press-fitted into the inner wall 32 of the flow passage hole 31, and the throttle hole 45 is offset from the fixing portion 49 in the axial direction.

Thereby, when the fixing portion 49 is press-fitted into the inner wall 32 of the flow passage hole 31, the deformation of the throttle hole 45 by the stress generated in the fixing portion 49 is suppressed. Therefore, the generation of the variation in the flow passage area of the throttle hole 45 is suppressed.

Although an embodiment of the present invention has been described, the embodiment is merely one of application examples of the present invention and by no means limits the technical scope of the present invention to a specific configuration of the above-mentioned embodiment.

For example, in the above embodiments, the fluid throttle member is provided in the hydraulic pump. However, the present invention is not limited to this but the fluid throttle member may be provided in other machines, facilities, and the like.

In the above embodiments, the working oil is used as a fluid flowing through the fluid throttle member. However, the present invention is not limited to this but a working fluid such as a water-soluble replacement solution and a gas may be used.

This application claims priority to Japanese Patent Application No. 2013-053333 filed in the Japanese Patent Office on March 15, 2013, the entire contents of which are incorporated by reference herein.

## Claims

1. A fluid throttle member inserted into a flow passage hole of a flow passage member, the fluid throttle member being adapted to restrict a flow of a fluid, comprising:
a fixing portion fixed to an inner wall of the flow passage hole to form a flow passage through which the fluid flows,
wherein a throttle hole is formed to be offset from the fixing portion in the axial direction of the flow passage hole, the throttle hole being adapted to restrict the flow of the fluid.

2. The fluid throttle member according to claim 1, further comprising:
a small diameter tubular portion provided continuously to the fixing portion, the small diameter tubular portion having an outer diameter smaller than the fixing portion, wherein
the throttle hole is formed in the small diameter tubular portion, and
the small diameter tubular portion is arranged with a gap from the inner wall of the flow passage hole.

3. The fluid throttle member according to claim 1, wherein
the fixing portion is screwed into a threaded portion formed on the inner wall of the flow passage hole.

4. The fluid throttle member according to claim 1, wherein
the fixing portion is press-fitted into the inner wall of the flow passage hole.
